Europäisches Patentamt

European Patent Office

Office européen des brevets

(11) Publication number: **0 359 398**
**A2**

# EUROPEAN PATENT APPLICATION

(21) Application number: **89308217.2**

(51) Int. Cl.⁵ **G01M 3/04**

(22) Date of filing: **14.08.89**

The title of the invention has been amended (Guidelines for Examination in the EPO, A-III, 7.3).

(30) Priority: **17.08.88 GB 8819552**

(43) Date of publication of application:
**21.03.90 Bulletin 90/12**

(84) Designated Contracting States:
**BE CH DE ES FR GB IT LI LU NL SE**

(71) Applicant: **United Engineering Steels Limited P.O. Box 29, Sheffield Road Rotherham S60 1DQ(GB)**

(72) Inventor: **Horton, Trevor 9 Greenspring Avenue Birdwell Barnsley S70 5RW Yorkshire(GB)**

(74) Representative: **Thorpe, Brian et al Ipsley Intellectual Property Services P.O. Box 55 Ipsley House Ipsley Church Lane Redditch Worcestershire B98 0TL(GB)**

(54) **Apparatus for detecting the presence of moisture as a result of leakage.**

(57) Moisture detection apparatus for detecting the presence of water leaks from water cooled panels in an electric arc furnace comprises one or more moisture sampling members (10) mounted on the furnace shell at locations below the bottoms of the water cooled panels. Each member (10) comprises a sampling tube (36) extending through a bore (30) into the furnace lining and an air intake (38) external of the furnace shell communicating with the sampling tube (36). An extractor pump sucks air through the intake (38) and sampling tube (36), thus picking up any moisture which is present below the water cooled panel (26), to cause the air to flow through an associated moisture sensor. The apparatus includes signal means responsive to a predetermined maximum permissible moisture content sensed by a sensor. The signal means may provide a visual and/or audible signal and/or a signal to actuate an air flow control valve to prevent further intake of air through the associated sensor.

Fig. 3

This invention relates to moisture detection apparatus for detecting the presence of moisture as a result of leakage from water cooled panels as used for example in the walls of electric arc furnaces in the steelmaking industry.

Water cooled panels are used extensively in the walls and roofs of electric arc furnaces in lieu of conventional refractory wall material above the top surface of the melt. For example, a furnace may have the usual refractory brickwork comprising those parts of the lining which are in contact with the melt during the refining process and water cooled panels above the refractory material; both the refractory and the water cooled panels being contained within a steel furnace shell.

Water cooled panels usually comprise either a continuous water flow path, e.g. in the form of a serpentine pipe, or a water box, and in either type of such panel the inner surface is exposed directly to the furnace interior. Should any water leakage occur from the inner surface of the panel then it is usually visible at the time of charging the furnace but, if leakage occurs at the rear surface of the panel, i.e. between the panel and the furnace shell, then the leak is not readily visible. Such leakage at the rear surface of a panel can remain undetected for a long period of time during which moisture can find its way into the refractory material below the panel with consequential risk of hot metal breakout. In the normal course of events a water cooled panel may only be scheduled for replacement every two thousand heats or so and thus, if any undetected water leak is present, considerable damage can result to the refractory material below the panel before the faulty panel is removed in accordance with its usual schedule.

It is an object of the present invention to provide moisture detection apparatus for use particularly in detecting the presence of water leaks occurring at the rear surface of a water cooled panel in an electric arc furnace.

In accordance with the invention there is provided moisture detection apparatus for use with a steelmaking furnace comprising a plurality of moisture sampling members installable in a said furnace at locations below water cooled panels forming part of the furnace wall, each said sampling member comprising a body portion mountable externally of the furnace shell about a bore therein which extends into the furnace lining below a said panel, an air sampling tube locatable to extend through said body portion into said bore to a position adjacent the furnace lining and an air intake locatable external of the furnace shell to extend through said body portion into communication with said bore; a conduit arrangable to extend from each said sampling tube through a moisture sensor to an air extractor pump whereby, in use, air may be extracted from atmosphere through a said air intake external of the furnace and flow through each said sampling tube and each associated said moisture sensor, and signal means being provided responsive to a predetermined maximum permissible moisture content sensed by a said sensor.

The moisture detection apparatus preferably includes air flow control means in each said conduit located intermediate each said sampling tube and each said sensor, said flow control means being actuable in response to a signal from said signal means to prevent the further flow of air through the said sensor if the moisture content of the air exceeds a said predetermined maximum permissible level.

The said air flow control means may conveniently comprise an electrically actuable flow control valve, for example, a solenoid valve.

Preferably at least one said sampling member is installable at a location below each water cooled panel of the furnace.

The invention also provides a steelmaking furnace having water cooled panels, typically an electric arc furnace, with moisture detection apparatus as described in the preceding paragraphs installed in conjunction therewith.

Other features of the invention will become apparent from the following description given herein solely by way of example with reference to the accompanying drawings wherein

Figure 1 is a flow diagram of a moisture detection apparatus installation in accordance with the invention;

Figure 2 is a side elevation of that part of a moisture sampling member forming part of such installation which is mounted externally of the furnace shell;

Figure 3 is a side cross sectional view through the moisture sampling member shown in Figure 2 and the adjacent part of the furnace shell and lining; and

Figure 4 is an end view of the moisture sampling member shown in Figure 1.

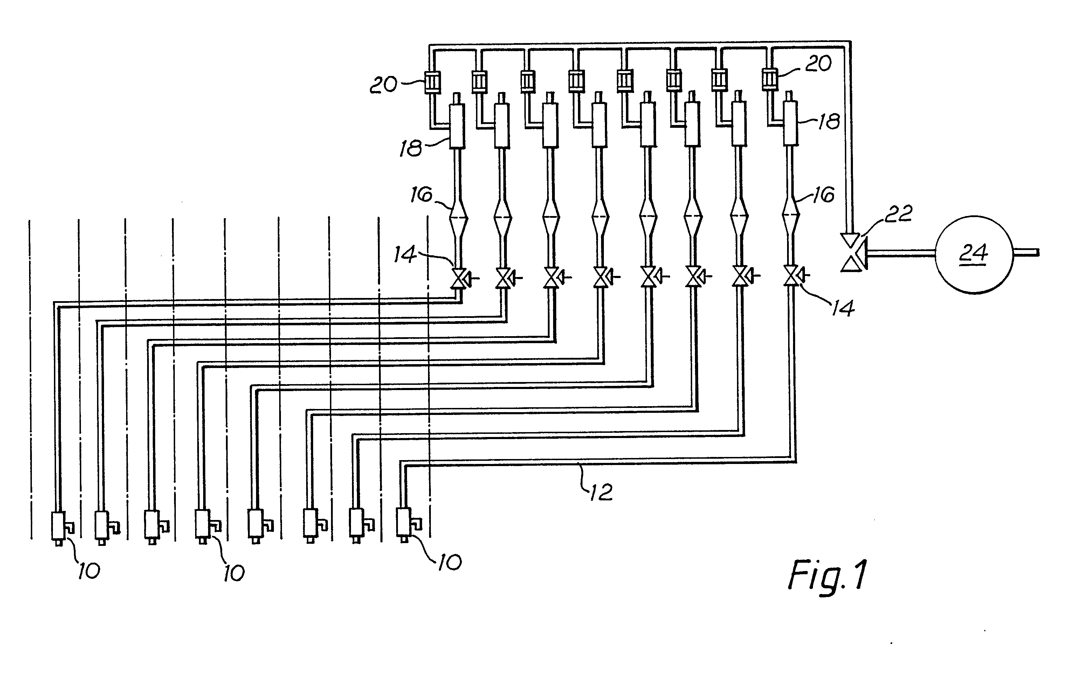

In accordance with the invention, and as shown generally in the flow diagram of Figure 1, the moisture detection apparatus comprises a plurality of moisture sampling members 10, of which only eight are shown in Figure 1, each of which is connected via a conduit 12 through an electrically actuated solenoid air flow control valve 14, an air filter 16, a moisture sensor 18, a flow meter 20 and a common main control valve 22 to an air extractor pump 24. In use, one or more such sampling members 10 will be installed in an electric arc furnace at locations below each water cooled panel forming part of the furnace wall.

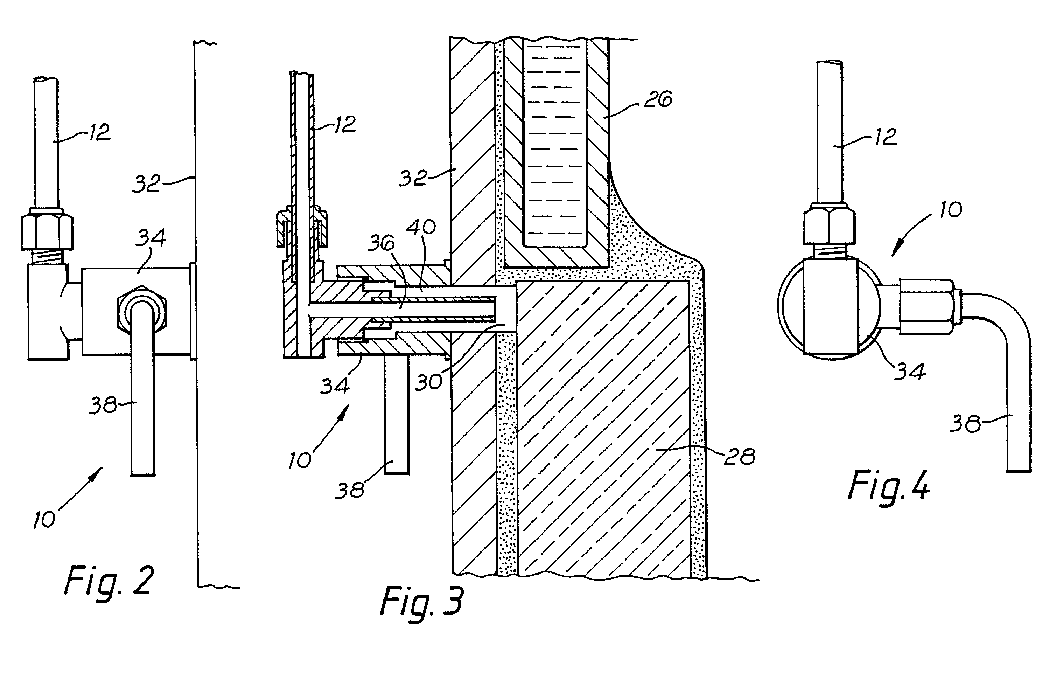

One of the moisture sampling members 10 is shown in more detail in Figures 2 to 4 wherein, in Figure 3, there is shown a water cooled panel 26 forming part of the furnace lining located above conventional refractory material 28 forming that part of the furnace lining which is in contact with the melt during the refining process. A through bore 30 is formed in the furnace shell 32 to extend into the refractory material inwardly of the shell 32 at a location below the water cooled panel 26 and the moisture sampling member is mounted to the furnace shell about the bore.

The member 10 comprises a tubular body portion 34 aligned with and communicating with the bore 30 with an air sampling tube 36 mounted at the outer end of the body portion to extend coaxially therethrough into the bore 30 terminating at a position spaced from the inner end of the bore 30. The outer end of the sampling tube 36 is connected to a conduit 12 extending to the control valve 14, filter 16, moisture sensor 18, flow meter 20, main control valve 22 and extractor pump 24 as shown in Figure 1.

An open ended air intake tube 38 is mounted to the body portion 34 external of the furnace shell 32 communicating with the annular space 40 defined internally of the body portion 34 around the sampling tube 36.

Thus, in use upon actuation of the extractor pump 24, air is sucked from atmosphere by the pump through the air intake 38 to flow along the conduit 12 and through the associated moisture sensor 18. Air taken into the conduit 12 through the air intake 38 flows past the open end of the air sampling tube 36 within each sampling member 10 thereby picking up any moisture which is present at the inner end of the bore 30 as a result of any water leakage which may have occurred in the associated panel 26.

The apparatus also includes signal means responsive to a predetermined maximum permissible moisture content as sensed by any one of the moisture sensors 18. Although such signal means may be merely visual or audible to alert an operative to the presence of an undesirable moisture content level it is preferred that a signal from said signal means actuates an associated air flow control valve 14 to prevent the further flow of air through the associated moisture sensor 18 in order to prevent damage to the sensor by the flow therethrough of air with an unacceptably high moisture content. The signal from the signal means may of course actuate the closure of an air flow control valve 14 as described in addition to the providing of a visual and/or audible signal to an operative.

In use, when the presence of an undesirably high moisture content has been detected by a said moisture sensor 18, it will be the practice to replace the faulty water cooled panel 26 as soon as possible instead of waiting for a normally scheduled replacement time. The invention thus provides apparatus enabling automatic detection of water leaks from water cooled panels in electric arc furnaces with the consequential prevention of refractory deterioration due to the presence of moisture in the refractory and the consequential reduction in risk of hot metal breakout.

Claims

1. Moisture detection apparatus for use with a steelmaking furnace characterised by the provision of a plurality of moisture sampling members (10) installable in a said furnace at locations below water cooled panels (26) forming part of the furnace wall, each said sampling member comprising a body portion (34) mountable externally of the furnace shell (32) about a bore (30) therein which extends into the furnace lining below a said panel, an air sampling tube (36) locatable to extend through said body portion into said bore to a position adjacent the furnace lining and an air intake (38) locatable external of the furnace shell to extend through said body portion into communication with said bore; a conduit (12) arrangable to extend from each said sampling tube through a moisture sensor (18) to an air extractor pump (24) whereby, in use, air may be extracted from atmosphere through a said air intake external of the furnace and flow through each said sampling tube and each associated said moisture sensor, and signal means being provided responsive to a predetermined maximum permissible moisture content sensed by a said sensor.

2. Moisture detection apparatus as claimed in Claim 1 further characterised in that air flow control means (14) in each said conduit are located intermediate each said sampling tube and each said sensor, said flow control means being actuable in response to a signal from said signal means to prevent the further flow of air through the said sensor if the moisture content of the air exceeds a said predetermined maximum permissible level.

3. Moisture detection apparatus as claimed in Claim 2 further characterised in that said control means (14) comprises an electrically actuable flow control valve.

4. Moisture detection apparatus as claimed in any one of the preceding claims further characterised in that at least one said sampling member (10) is installable at a location below each water cooled panel (26) of the furnace.

5. A steelmaking furnace characterised by the provision of water cooled panels (26) with moisture detection apparatus as claimed in any one of the preceding claims installed in conjunction therewith.

Fig.1

Fig. 2

Fig. 3

Fig. 4

EP 0 359 398 A2